# EUROPÄISCHE PATENTANMELDUNG

(11) **EP 4 610 080 A1**
(43) Veröffentlichungstag der Anmeldung: **03.09.2025**
(21) Anmeldenummer: 25150660.6
(22) Anmeldetag: 08.01.2025
(51) Int. Cl.: B60K 11/04

(54) **TRAKTOR**

(30) Priorität: 28.02.2024 DE 102024105598
(71) Anmelder: CLAAS Tractor S.A.S., 78141 Vélizy-Villacoublay Cedex (FR)
(72) Erfinder: Krawinkel, Andreas, Paderborn (DE); Guitton, Paul Henri, PLAISIR (FR); Volck, Aurelien, LIMERSHEIM (FR)
(74) Vertreter: CLAAS Gruppe

(57) **Zusammenfassung**

Die vorliegende Erfindung betrifft einen Traktor (1) mit einem Chassis (2), welches ein Antriebsaggregat (3), ein Fahrgetriebe (4), eine antreibbare Hinterachsbaugruppe (5), eine Vorderachsbaugruppe (6) und eine Frontanbaubaugruppe (7) umfasst. Die Vorderachsbaugruppe (6) umfasst ein Achsgetriebegehäuse (13) und zwei am Achsgetriebegehäuse (13) gelagerte Radaufhängungen (14), an denen vordere Bodeneingriffsmittel (15) angeordnet sind. Der Traktor (1) umfasst ferner ein Kühlsystem (16) zum Kühlen des Antriebsaggregats (3). Der Traktor (1) ist dadurch gekennzeichnet, dass das Achsgetriebegehäuse (13) der Vorderachsbaugruppe (6) in Fahrzeuglängsrichtung (F_{L}) gesehen zwischen dem Antriebsaggregat (3) und der Frontanbaubaugruppe (7) angeordnet ist. Das Kühlsystem (16) ist ferner oberhalb des Achsgetriebegehäuses (13) und in Fahrzeuglängsrichtung (F_{L}) gesehen vollständig zwischen einer vorderen, sich vertikal erstreckenden Ebene (23), welche die Hüllkurven (24) der vorderen Bodeneingriffsmittel (15) in Geradeausstellung tangiert, und einer hinteren, sich vertikal erstreckenden Ebene (25), welche die Hüllkurven (24) der vorderen Bodeneingriffsmittel (15) in Geradeausstellung tangiert, angeordnet.

## Beschreibung

Die vorliegende Erfindung betrifft einen Traktor gemäß dem Oberbegriff des unabhängigen Patentanspruchs 1.

Bei landwirtschaftlichen Arbeitsmaschinen, wie Traktoren, sind Achsbaugruppen bekannte Bauteile. Eine Vorderachsbaugruppe beispielsweise umfasst üblicherweise neben einer Vorderachse mit daran lenkbar angeordneten Vorderrädern auch eine Vorderachsstütze, welche zur Abstützung der Vorderachse an dieser und einem Chassis der Arbeitsmaschine gelagert ist. Die Vorderachsbaugruppe ist hierdurch insgesamt relativ zu dem Chassis beweglich und kann sich somit Bodenunebenheiten anpassen, ohne dass das Chassis der Arbeitsmaschine jeder Bewegung der Vorderachse folgen muss, insbesondere bei Lenkbewegungen der Vorderräder. Eine Antriebswelle, welche ein Drehmoment von einem Antriebsmotor auf eine solche Vorderachse überträgt, ist dabei ebenfalls beweglich ausgebildet, um den Bewegungen der Vorderachsbaugruppe folgen zu können.

Pflanzung, Kultivierung und viele andere gängige Anbaupraktiken erfordern extreme Präzision bei der Manövrierfähigkeit. Auch das Umfahren von Hindernissen und die Bewirtschaftung enger Reihenkulturen erfordern eine ausgezeichnete Manövrierfähigkeit, sodass an landwirtschaftliche Arbeitsmaschinen oftmals hohe Anforderungen hinsichtlich ihrer Wendigkeit gestellt werden. Zusätzlich spart ein kleiner Wendekreis am Vorgewende eines Feldes Zeit und Platz ein. Oftmals gehen diese Anforderungen mit einem hohen Leistungsbedarf der Arbeitsmaschinen einher, was zu einem erhöhten Bauraumbedarf führt, welcher wiederum die Lenkung und damit die Wendigkeit der Arbeitsmaschine nachteilig beeinflussen kann. Ein höherer Leistungsbedarf bedingt üblicherweise auch größere Vorderräder, wodurch sich die Herausforderungen hinsichtlich der Wendigkeit weiter erhöhen. Zudem werden die Herausforderungen weiterhin dadurch verschärft, dass oftmals mit engen und verstellbaren Reifenabständen sowie einer Doppelbereifung gearbeitet wird.

Um diese Herausforderungen zu adressieren, ist es aus der US 5,152,364 A bekannt, die Architektur eines Traktors derart zu gestalten, dass das Antriebsaggregat, also der Motor, des Traktors direkt über der Vorderachse angeordnet ist und das Kühlsystem weit genug vor dem Antriebsaggregat platziert ist, sodass selbst eng beieinander liegende große Räder in den Raum zwischen dem Kühlsystem und dem Antriebsaggregat eindrehen können. Der vordere Teil des Traktors wird durch diese Konfiguration derart verlängert, dass dieser deutlich über die Vorderachse hinausragt.

Die Trennung von Kühlsystem und Antriebsaggregat erlaubt es demnach zwar einen Raum zu schaffen, in welchen die Vorderräder bei einem Lenkeinschlag eindrehen können, schafft jedoch Nachteile in Bezug auf die Kühlung selbst, eine Schwerpunktlage des Traktors und damit einhergehend die Ballastierung des Traktors und die Kopplung des Traktors mit Anbaugeräten. Ebenso bedingt die hohe Lage des Antriebsaggregats über der Vorderachse eine zusätzliche Kardanwelle und/oder Zahnradstufe zur Anbindung des Antriebsaggregats an das Fahrgetriebe.

Ausgehend hiervon ist es demnach die Aufgabe der vorliegenden Erfindung die beschriebenen Nachteile des Standes der Technik auszuräumen und insbesondere einen Traktor anzugeben, der bei hohen Leistungsbedarfen und verschiedensten Konfigurationen von vorderen Bodeneingriffsmitteln, ohne räumliche Trennung von Kühlsystem und Antriebsaggregat, eine hohe Wendigkeit gewährleistet.

Diese Aufgabe wird erfindungsgemäß durch die Merkmale des unabhängigen Patentanspruchs 1 gelöst, wobei vorteilhafte Weiterbildungen des erfindungsgemäßen Traktors Gegenstand der entsprechenden abhängigen Patentansprüche 2 bis 16 sind.

Demnach betrifft die vorliegende Erfindung einen Traktor mit einem Chassis. Das Chassis umfasst ein Antriebsaggregat, ein Fahrgetriebe, eine antreibbare Hinterachsbaugruppe mit daran angeordneten hinteren Bodeneingriffsmitteln, eine Vorderachsbaugruppe mit daran angeordneten vorderen Bodeneingriffsmitteln und eine Frontanbaubaugruppe zum Koppeln von Anbaugeräten oder zur Aufnahme von Ballastgewichten. Die Vorderachsbaugruppe umfasst ein Achsgetriebegehäuse und zwei am Achsgetriebegehäuse einander gegenüberliegend gelagerte Radaufhängungen, an denen die vorderen Bodeneingriffsmittel angeordnet sind. Der Traktor umfasst weiterhin ein Kühlsystem zum Kühlen des Antriebsaggregats. Der Traktor ist dadurch gekennzeichnet, dass das Achsgetriebegehäuse der Vorderachsbaugruppe in Fahrzeuglängsrichtung gesehen zwischen dem Antriebsaggregat und der Frontanbaubaugruppe angeordnet ist. Das Kühlsystem ist oberhalb des Achsgetriebegehäuses und in Fahrzeuglängsrichtung gesehen vollständig zwischen einer vorderen, sich vertikal erstreckenden Ebene, welche die Hüllkurven der vorderen Bodeneingriffsmittel in Geradeausstellung tangiert, und einer hinteren, sich vertikal erstreckenden Ebene, welche die Hüllkurven der vorderen Bodeneingriffsmittel in Geradeausstellung tangiert, angeordnet.

Die Schaffung einer integrierten Vorderachse durch Anordnung des Achsgetriebegehäuses der Vorderachsbaugruppe und somit der Vorderachsbaugruppe insgesamt zwischen dem Antriebsaggregat und der Frontanbaubaugruppe sorgt dafür, dass die Frontanbaubaugruppe und das Antriebsaggregat durch hinreichende Beabstandung aus dem Aktionsradius der vorderen Bodeneingriffsmittel weitestgehend herausverlagert werden. Mit anderen Worten, die Frontanbaubaugruppe und das Antriebsaggregat schaffen im Wesentlichen keine Restriktionen für die Bewegungsfreiheit der über die Radaufhängungen angeordneten vorderen Bodeneingriffsmittel in sämtliche Fahrzeugrichtungen. Durch die Integration der Vorderachsbaugruppe wird weiterhin Bauraum oberhalb der Vorderachsbaugruppe selbst geschaffen, der zur Unterbringung des Kühlsystems genutzt werden kann. Dabei sorgt die spezifische Anordnung des Kühlsystems zwischen den beiden die Hüllkurven der vorderen Bodeneingriffsmittel in Geradeausstellung tangierenden, vertikal verlaufenden Ebenen dafür, dass auch das Kühlsystem aus dem Aktionsradius der vorderen Bodeneingriffsmittel weitestgehend herausverlagert wird und somit ebenfalls im Wesentlichen keine Restriktionen für die Bewegungsfreiheit der vorderen Bodeneingriffsmittel in sämtliche Fahrzeugrichtungen schafft. Vielmehr ist das Kühlsystem über der Vorderachsbaugruppe in einem Bereich zwischen den vorderen Bodeneingriffsmitteln positioniert, in welchen die vorderen Bodeneingriffsmittel auch bei maximalem Lenkeinschlag nicht eindringen. Dieser Aufbau sorgt dafür, dass die vorderen Bodeneingriffsmittel einerseits näher als üblich relativ zum Chassis positioniert werden können, der maximal mögliche Lenkwinkel der vorderen Bodeneingriffsmittel trotz alledem hinreichend groß ist, um eine gute Wendigkeit, also einen möglichst geringen Wenderadius, und Manövrierfähigkeit des Traktors sicherzustellen. Insbesondere bei Arbeiten in Reihenkulturen, die eine hohe Präzision hinsichtlich Lenkung und Spurtreue erfordern und bei welchen der Traktor oftmals mit einer Doppelbereifung mit geringen Spurweiten ausgestattet ist, entfaltet die erfindungsgemäße Ausgestaltung somit im Besonderen ihre Vorzüge.

Gemäß einer vorteilhaften Weiterbildung der Erfindung ist vorgesehen, dass das Achsgetriebegehäuse, das Antriebsaggregat und die Frontanbaubaugruppe jeweils zwei voneinander in Fahrzeuglängsrichtung beabstandete Anbindungsschnittstellen umfassen, wobei das Achsgetriebegehäuse und das Antriebsaggregat mittels jeweils einer ihrer beiden Anbindungsschnittstellen miteinander verbunden sind, wobei das Achsgetriebegehäuse und die Frontanbaubaugruppe mittels jeweils einer ihrer beiden Anbindungsschnittstellen miteinander verbunden sind, wobei das Antriebsaggregat mittels einer ihrer beiden Anbindungsschnittstellen mit dem Fahrgetriebe verbunden ist, wobei die Frontanbaubaugruppe mittels einer ihrer beiden Anbindungsschnittstellen zur Kopplung von Anbaugeräten oder zur Aufnahme von Ballastgewichten eigerichtet ist.

Das Achsgetriebegehäuse, das Antriebsaggregat und die Frontanbaubaugruppe umfassen somit jeweils eine frontseitige Anbindungsschnittstelle, also eine Anbindungsschnittstelle, welche zur Front des Traktors weist, und eine rückseitige Anbindungsschnittstelle, also eine Anbindungsschnittstelle, welche zum Heck des Traktors weist. Die frontseitige Anbindungsschnittstelle und die rückseitige Anbindungsschnittstelle sind voneinander in Fahrzeuglängsrichtung beabstandet. Die rückseitige Anbindungsschnittstelle des Achsgetriebegehäuses ist mit der frontseitigen Anbindungsschnittstelle des Antriebsaggregats verbunden. Die frontseitige Anbindungsschnittstelle des Achsgetriebegehäuses ist mit der rückseitigen Anbindungsschnittstelle der Frontanbaubaugruppe verbunden. Das Antriebsaggregat ist ferner mittels seiner rückseitigen Anbindungsschnittstelle mit dem Fahrgetriebe verbunden und die Frontanbaubaugruppe ist mittels ihrer frontseitigen Anbindungsschnittstelle zur Kopplung von Anbaugeräten oder zur Aufnahme von Ballastgewichten eingerichtet.

Gemäß einer vorteilhaften Weiterbildung der Erfindung ist vorgesehen, dass das Kühlsystem in Fahrzeuglängsrichtung gesehen vollständig zwischen den beiden Anbindungsschnittstellen, also der frontseitigen Anbindungsschnittstelle und der rückseitigen Anbindungsschnittstelle, des Achsgetriebegehäuses angeordnet ist.

Die Positionierung des Kühlsystems zwischen der frontseitigen und der rückseitigen Anbindungsschnittstelle des Achsgetriebegehäuses der Vorderachsbaugruppe sorgt dafür, dass das Kühlsystem unmittelbar über dem Achsgetriebegehäuse, somit im Zentrum der Vorderachsbaugruppe, angeordnet ist. Im Zentrum der Vorderachsbaugruppe zwischen den vorderen Bodeneingriffsmitteln ist hinreichend Platz, der vorteilhaft zur Anordnung von Komponenten mit höherem Bauraumbedarf, wie beispielsweise des Kühlsystems mit seinen verschiedenen Aggregaten, genutzt werden kann. Da dieser "zentrale" Bereich in Fahrzeuglängsrichtung gesehen im Wesentlichen mit der Lage der Radaufhängungen zusammenfällt, befindet er sich im Wesentlichen außerhalb des Aktionsradius der vorderen Bodeneingriffsmittel. Bewegungen der vorderen Bodeneingriffsmittel, insbesondere bei Lenkeinschlägen, beeinträchtigen diesen Bereich somit, wenn überhaupt, nur zu vernachlässigend.

Gemäß einer vorteilhaften Weiterbildung der Erfindung ist vorgesehen, dass das Antriebsaggregat in einem Bereich vor der Anbindungsschnittstelle, mittels welcher das Antriebsaggregat mit der dem Achsgetriebegehäuse verbunden ist, also dessen frontseitiger Anbindungsschnittstelle, und die Frontanbaubaugruppe in einem Bereich nach deren Anbindungsschnittstelle, mittels welcher die Frontanbaubaugruppe mit dem Achsgetriebegehäuse verbunden ist, also ihrer rückseitigen Anbindungsschnittstelle, jeweils einen Einzug umfassen.

Die Schaffung von Einzügen in den an das Achsgetriebegehäuse angrenzenden Bereichen der der Vorderachsbaugruppe benachbarten Komponenten, also dem Antriebsaggregat und der Frontanbaubaugruppe, sorgt weiter begünstigend für eine hohe Wendigkeit des Traktors. Bei einem Lenkeinschlag der vorderen Bodeneingriffsmittel können sich die vorderen Bodeneingriffsmittel in die Einzüge hineinbewegen, der maximale Lenkwinkel der vorderen Bodeneingriffsmittel kann somit im Vergleich zu einer Ausgestaltung ohne Einzüge weiter erhöht werden. Zudem lassen sich die vorderen Bodeneingriffsmittel durch diese Ausgestaltung näher am Chassis anordnen, wodurch der Traktor im Frontbereich insgesamt schmaler wird.

Gemäß einer vorteilhaften Weiterbildung der Erfindung ist vorgesehen, dass das Antriebsaggregat als Verbrennungsmotor mit einem Motorblock und einer unterhalb des Motorblocks angeordneten Ölwanne ausgeführt ist, wobei die Ölwanne die beiden Anbindungsschnittstellen, also die frontseitige Anbindungsschnittstelle und die rückseitige Anbindungsschnittstelle, des Antriebsaggregats umfasst.

Das Antriebsaggregat stellt somit ein Strukturbauteil des Traktors dar.

Gemäß einer vorteilhaften Weiterbildung der Erfindung ist vorgesehen, dass jede Radaufhängung der Vorderachsbaugruppe einen oberen Querlenker und einen unteren Querlenker umfasst, die jeweils einerseits mit dem Achsgetriebegehäuse schwenkbeweglich und andererseits mit einer Radnabe, an welcher jeweils zumindest ein vorderes Bodeneingriffsmittel drehbeweglich gelagert ist, drehbeweglich verbunden sind.

Die Nutzung von Radaufhängungen mit zwei Querlenkern sorgt für eine hohe Bewegungsfreiheit, somit einen großen Aktionsradius, der vorderen Bodeneingriffsmittel in sämtliche Fahrzeugrichtungen. Auch größere Höhenunterschiede des Untergrunds, auf dem sich der Traktor im Betrieb bewegt, können somit auf komfortable Art und Weise ausgeglichen werden.

Gemäß einer vorteilhaften Weiterbildung der Erfindung ist vorgesehen, dass jede Radaufhängung der Vorderachsbaugruppe eine Lenkstange umfasst, die einerseits mit der Radnabe und andererseits, vorzugsweise unter Zwischenschaltung eines Lenkzylinders, mit einem im Achsgetriebegehäuse angeordneten Lenkgetriebe gekoppelt ist.

Gemäß einer vorteilhaften Weiterbildung der Erfindung ist vorgesehen, dass die Lenkstange in Fahrzeuglängsrichtung gesehen näher an der Anbindungsschnittstelle des Achsgetriebegehäuses positioniert ist, mittels welcher das Achsgetriebegehäuse mit dem Antriebsaggregat verbunden ist, also der rückseitigen Anbindungsschnittstelle, als an der Anbindungsschnittstelle des Achsgetriebegehäuses, mittels welcher das Achsgetriebegehäuse mit der Frontanbaubaugruppe verbunden ist, also der frontseitigen Anbindungsschnittstelle.

Vorzugsweise ist vorgesehen, dass die Lenkstange in Fahrzeuglängsrichtung gesehen hinter einer in Fahrzeugbreitenrichtung zentrisch durch die Radnaben der Radaufhängung verlaufenden Achse angeordnet ist.

Die Kopplung von Lenkgetriebe und Radnabe über eine solch positionierte Lenkstange schafft eine sehr präzise Lenkung des Traktors mit besonders gutem Ansprechverhalten. Der Traktor kann hierdurch hochpräzise auf der Straße, auf einer Hofstätte oder im Feld manövriert werden, wobei der Bediener gleichzeitig ein aussagekräftiges Feedback von der Lenkung erhält. Zusätzlich erlaubt eine solche Positionierung höhere Lenkwinkel bei geringen Spurweiten der vorderen Bodeneingriffsmittel.

Gemäß einer vorteilhaften Weiterbildung der Erfindung ist vorgesehen, dass der obere Querlenker und/oder der untere Querlenker jeder Radaufhängung der Vorderachsbaugruppe mittels mindestens eines Federungs- und/oder Dämpfungselements mit dem Achsgetriebegehäuse gekoppelt ist.

Die Kopplung der vorderen Bodeneingriffsmittel mit dem Chassis über relativ zum Achsgetriebegehäuse gefederte und/oder gedämpfte Querlenker sorgt für einen besonders hohen wahrnehmbaren Fahrkomfort bei gleichzeitig guter Spurtreue.

Gemäß einer vorteilhaften Weiterbildung der Erfindung ist vorgesehen, dass der obere Querlenker und/oder der untere Querlenker jeder Radaufhängung der Vorderachsbaugruppe Y-förmig ausgebildet ist, wobei der Querlenker mittels zweier Anbindungspunkte schwenkbeweglich mit dem Achsgetriebegehäuse und mittels eines Anbindungspunkts drehbeweglich mit der Radnabe verbunden ist.

Diese Ausgestaltung der Querlenker sorgt für eine zuverlässige Kraftleitung der über die vorderen Bodeneingriffsmittel einwirkenden Kräfte hin zum Chassis und sorgt gleichzeitig dafür, dass die vorderen Bodeneingriffsmittel einen großen Lenkwinkel abbilden können.

Gemäß einer vorteilhaften Weiterbildung der Erfindung ist vorgesehen, dass das Antriebsaggregat eine Ausgangswelle umfasst, wobei die Ausgangswelle mit einer Eingangswelle des Fahrgetriebes koppelbar ist und mit dieser fluchtet.

Die fluchtende Lage der Ausgangswelle des Antriebsaggregats und der Eingangswelle des Fahrgetriebes sorgt dafür, dass das Chassis in Fahrzeuglängsrichtung gesehen über die gesamte Länge hin einen im Wesentlichen gleichen Abstand zum Untergrund aufweist, wodurch eine gute Bodenfreiheit gewährleistet wird.

Gemäß einer vorteilhaften Weiterbildung der Erfindung ist vorgesehen, dass das Antriebsaggregat eine Ausgangswelle umfasst, wobei die Ausgangswelle mit einer in der Frontanbaubaugruppe gelagerten Zapfwelle, vorzugsweise unter Zwischenschaltung eines in der Frontanbaubaugruppe angeordneten Zapfwellengetriebes und einer Welle, koppelbar ist.

Vorzugsweise ist vorgesehen, dass die Zapfwelle in Fahrzeuglängsrichtung gesehen vollständig vor der vorderen, sich vertikal erstreckenden Ebene, welche die Hüllkurven der vorderen Bodeneingriffsmittel in Geradeausstellung tangiert, angeordnet ist.

Die Anordnung der Zapfwelle in Fahrzeuglängsrichtung vor der vorderen, sich vertikal erstreckenden Ebene sorgt dafür, dass die Zapfwelle und somit über diese koppelbare Anbaugeräte keinen nachteiligen Einfluss auf den Aktionsradius der vorderen Bodeneingriffsmittel und somit die Wendigkeit des Traktors haben.

Gemäß einer vorteilhaften Weiterbildung der Erfindung ist vorgesehen, dass das Antriebsaggregat eine Ausgangswelle umfasst, wobei die Ausgangswelle mit einem in dem Achsgetriebegehäuse angeordneten Antriebsgetriebe zum Antrieb der vorderen Bodeneingriffsmittel koppelbar ist.

Durch die Kopplungsmöglichkeit einer Ausgangswelle mit einem im Achsgetriebegehäuse angeordneten Antriebsgetriebe wird es möglich verschiedene Fahrmodi, wie einen reinen Hinterradantrieb, einen reinen Bodeneingriffsmittelantrieb oder aber einen Allradantrieb, zu realisieren.

Gemäß einer vorteilhaften Weiterbildung der Erfindung ist vorgesehen, dass dem Antriebsaggregat Hilfsaggregate zugeordnet sind, wobei die Hilfsaggregate in Fahrzeughöhenrichtung gesehen vollständig über einer oberen, sich horizontal erstreckenden Ebene, welche die Hüllkurve der vorderen Bodeneingriffsmittel in Geradeausstellung tangiert, angeordnet sind.

Eine solche Anordnung der Hilfsaggregate des Antriebsaggregats sorgt dafür, dass auch diese Komponenten den Aktionsradius der vorderen Bodeneingriffsmittel nicht nachteilig beeinflussen, wodurch die Wendigkeit des Traktors weiterhin begünstigt wird.

Gemäß einer vorteilhaften Weiterbildung der Erfindung ist vorgesehen, dass das Kühlsystem zumindest einen Lüfter, einen Ölkühler und einen Wärmetauscher umfasst, die in Fahrzeuglängsrichtung gesehen einander benachbart angeordnet sind.

Gemäß einer vorteilhaften Weiterbildung der Erfindung ist vorgesehen, dass zumindest eins der Aggregate des Kühlsystems in Bezug auf die Fahrzeuglängsrichtung und die Fahrzeugvertikalrichtung geneigt angeordnet ist.

Die schräge Anordnung zumindest eines Aggregats des Kühlsystems sorgt für eine effizientere Bauraumnutzung und somit eine kompaktere Anordnung des Kühlsystems insgesamt.

Die vorliegende Erfindung wird nachstehend anhand der in den Figuren abgebildeten Ausführungsformen näher beschrieben.

Es zeigen:
- FIG. 1: eine schematische und exemplarische Darstellung eines erfindungsgemäßen Traktors;
- FIG. 2: eine schematische und exemplarische Darstellung eines Chassis des erfindungsgemäßen Traktors gemäß FIG. 1;
- FIG. 3: eine schematische und exemplarische Darstellung einer Front des erfindungsgemäßen Traktors gemäß FIG. 1 mit geöffneter Motorhaube;
- FIG. 4: eine schematische und exemplarische Darstellung einer Vorderachsbaugruppe des Chassis gemäß FIG. 2 in einer ersten Ansicht; und
- FIG. 5: eine schematische und exemplarische Darstellung der Vorderachsbaugruppe aus FIG. 4 in einer zweiten Ansicht.

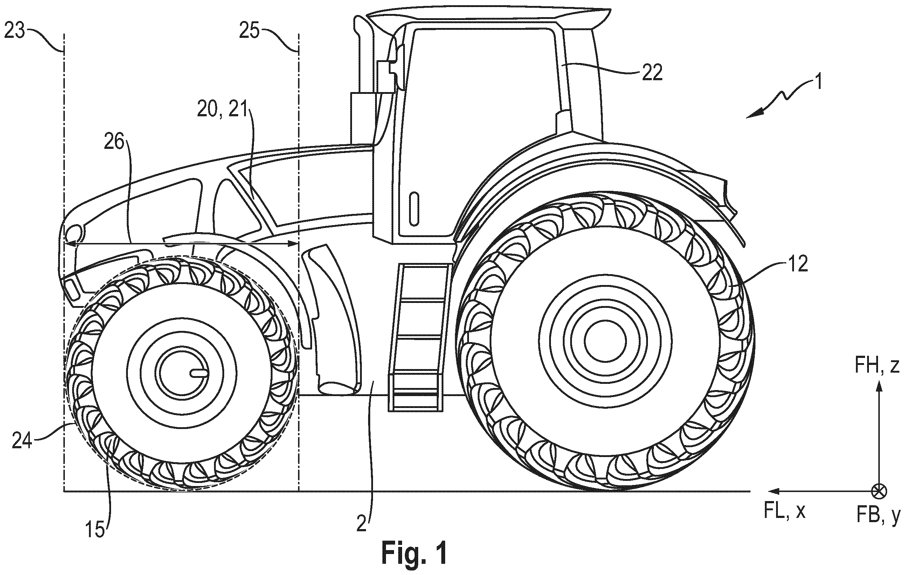

FIG. 1 zeigt einen erfindungsgemäßen Traktor 1 in einer schematischen und exemplarischen Darstellung, wobei der grundsätzliche Aufbau eines Traktors 1 als dem Fachmann bekannt angesehen wird. Der Traktor 1 kann anhand von drei Erstreckungsrichtungen räumlich definiert werden, die durch ein Koordinatensystem in FIG. 1 beispielhaft kenntlich gemacht sind. Die erste Erstreckungsrichtung ist dabei die Längsrichtung des Traktors 1, im Folgenden auch als Fahrzeuglängsrichtung F_{L} bezeichnet, die in x-Achsenrichtung verläuft, die zweite Erstreckungsrichtung ist die Breitenrichtung des Traktors 1, im Folgenden auch als Fahrzeugbreitenrichtung F_{B} bezeichnet, die in y-Achsenrichtung verläuft, und die dritte Erstreckungsrichtung ist die Höhenrichtung des Traktors 1, im Folgenden auch als Fahrzeughöhenrichtung F_{H} bezeichnet, die in z-Achsenrichtung verläuft.

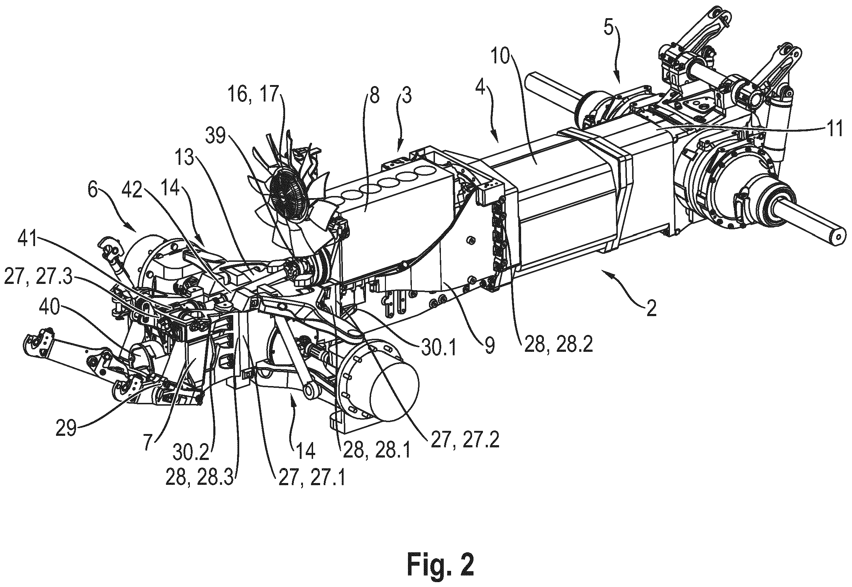

Der Traktor 1 umfasst unter anderem ein Chassis 2, welches schematisch und exemplarisch in FIG. 2 dargestellt ist. Das Chassis 2 wird von einem Antriebsaggregat 3, einem Fahrgetriebe 4, einer Hinterachsbaugruppe 5, einer Vorderachsbaugruppe 6 und einer Frontanbaubaugruppe 7 zum Koppeln von Anbaugeräten oder zur Aufnahme von Ballastgewichten gebildet. Bei dem erfindungsgemäßen Traktor 1 handelt es sich demnach um einen Traktor in Blockbauweise, bei welcher die zuvor genannten Komponenten 3, 4, 5, 6, 7 die tragende Struktur des Traktors 1 bilden, somit kein separater Tragrahmen erforderlich ist. Die Hinterachsbaugruppe 5 bildet dabei in Fahrzeuglängsrichtung F_{L} gesehen die Heckkomponente des Chassis 2, die Frontanbaubaugruppe die Frontkomponente des Chassis 2. Auf die Hinterachsbaugruppe 5 folgt in Fahrzeuglängsrichtung F_{L} gesehen zunächst das Fahrgetriebe 4, dann das Antriebsaggregat 3, dann die Vorderachsbaugruppe 6 und letztendlich die Frontanbaubaugruppe 7. Das Antriebsaggregat 3 ist als Verbrennungskraftmaschine, vorzugsweise mit mindestens sechs Zylindern in Reihenbauweise (Reihensechszylinder), ausgebildet und umfasst einen Motorblock 8 und eine unterhalb des Motorblocks 8 angeordnete Ölwanne 9. Gleichermaßen kann das Antriebsaggregat 3 allerdings auch auf einer anderen Technologie basieren. Das Fahrgetriebe 4 wird von einem Fahrgetriebegehäuse 10 mit darin angeordneten - in den FIGs. nicht dargestellten - Getriebekomponenten, die beispielsweise Schwungmassen, Kupplungen, Wellen, Zahnräder oder dergleichen, gebildet und kann als stufenlosverstellbares Getriebe (CVT ("continous variable transmission")) oder als Lastschaltgetriebe ausgeführt sein. Das Antriebsaggregat 3 umfasst eine - in den FIGs. nicht dargestellte - Ausgangswelle, welche mit einer - in den FIGs. nicht dargestellten - Eingangswelle des Fahrgetriebes 4, insbesondere unter Zwischenschaltung einer Kupplung, koppelbar ist. Diese Ausgangswelle fluchtet vorzugsweise mit der Eingangswelle des Fahrgetriebes 4, die Ausgangswelle ist demnach koaxial zur Eingangswelle des Fahrgetriebes 4 angeordnet, wobei Abweichungen im Rahmen fachüblicher Toleranzen zulässig sind. Die Hinterachsbaugruppe 5 wird von mindestens einem Hinterachsgehäuse 11 mit darin angeordneten - in den FIGs. nicht dargestellten - Achs- und Triebkomponenten gebildet, wodurch es möglich ist an der Hinterachsbaugruppe 5 angeordnete hintere Bodeneingriffsmittel 12 mittels von dem Antriebsaggregat 3 bereitgestellter Leistung anzutreiben. Neben einem reinen Antrieb der hinteren Bodeneingriffsmittel 12, wäre es auch grundsätzlich vorstellbar im Hinterachsgehäuse 11 zusätzliche Lenkgetriebekomponenten vorzusehen, sodass die hinteren Bodeneingriffsmittel 12 zudem lenkbar sind. Die Hinterachsbaugruppe 5 kann weiterhin eine - in den FIGs. nicht dargestellte - hintere Zapfwelle zum Antrieb von koppelbaren Anbaugeräten umfassen. Die Vorderachsbaugruppe 6 umfasst ein Achsgetriebegehäuse 13 sowie zwei am Achsgetriebegehäuse 13 einander gegenüberliegend gelagerte Radaufhängungen 14, an denen vordere Bodeneingriffsmittel 15 angeordnet sind. In einer bevorzugten - in FIG. 1 dargestellten - Ausführungsform des Traktors 1 sind die vorderen Bodeneingriffsmittel 15 und die hinteren Bodeneingriffsmittel 12 in Gestalt von Rädern, also als Vorderräder und Hinterräder, ausgebildet. Es ist gleichermaßen aber auch vorstellbar, dass die vorderen Bodeneingriffsmittel 15 und/oder die hinteren Bodeneingriffsmittel 12 als Raupenlaufwerke ausgebildet sind.

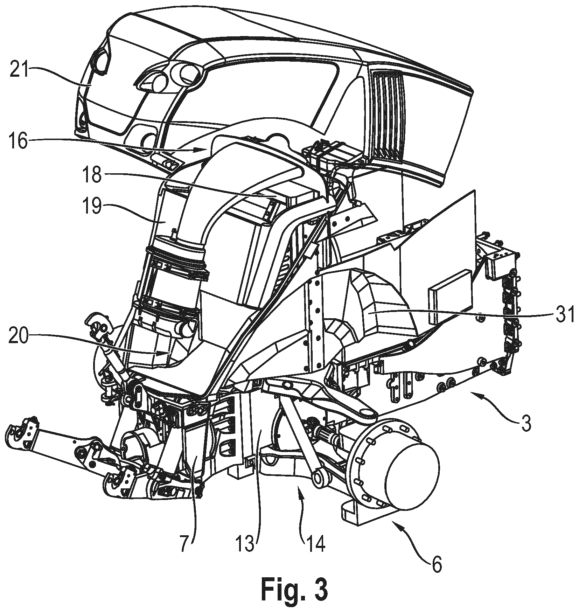

Neben dem Chassis 2 umfasst der Traktor 1 weiterhin ein Kühlsystem 16 zum Kühlen des Antriebsaggregats 3, welches insbesondere in FIG. 3 dargestellt ist. Das Kühlsystem 16 umfasst dabei verschiedene Aggregate, die verschiedene Funktionen zur Sicherstellung des Kühlkreislaufs des Antriebsaggregats 3 erfüllen. Insbesondere umfasst das Kühlsystem 15 zumindest einen Lüfter 17, einen Ölkühler 18 und einen Wärmetauscher 19, die in Fahrzeuglängsrichtung F_{L} gesehen einander benachbart angeordnet sind. In FIG. 3 ist der Lüfter 17 durch die anderen Aggregate 18, 19 verdeckt, in FIG. 2 ist er hingegen dargestellt, die anderen Komponenten aus Gründen der Darstellung jedoch weggelassen. Die Position eines Aggregats 17, 18, 19 in Bezug auf die jeweils anderen Aggregate 17, 18, 19 kann dabei variieren. Beispielsweise kann in Fahrzeuglängsrichtung F_{L} gesehen vom Antriebsaggregat 3 ausgehend in Richtung Front des Traktors 1 zunächst der Lüfter 17, dann der Ölkühler 18 und dann der Wärmetauscher 19 hintereinander angeordnet sein. Gleichermaßen könnte allerdings auch ausgehend vom Antriebsaggregat 3 in Richtung Front des Traktors 1 zunächst der Ölkühler 18, dann der Wärmetauscher 19 und dann der Lüfter 17 hintereinander angeordnet sein. Die verschiedenen Aggregate 17, 18, 19 des Kühlsystems 16 können jeweils einteilig oder auch mehrteilig ausgebildet sein. Der Ölkühler 18 und/oder der Wärmetauscher 19 könnten beispielsweise von zwei oder mehr Teilölkühlern bzw. zwei oder mehr Teilwärmetauschern gebildet werden. Zudem können neben den genannten Aggregaten, Lüfter 17, Ölkühler 18 und Wärmetauscher 19, weitere Aggregate Bestandteil des Kühlsystems 16 sein, insbesondere ein zusätzlicher Lüfter. Das Kühlsystem 16 könnte bei einer solchen Ausgestaltung so aufgebaut sein, dass in Fahrzeuglängsrichtung F_{L} gesehen ausgehend vom Antriebsaggregat 3 in Richtung Front des Traktors 1 zunächst der Lüfter 17, dann der Ölkühler 18, dann der Wärmetauscher 19 und dann der weitere Lüfter angeordnet sind. Zumindest eines der Aggregate, Lüfter 17, Ölkühler 18 und Wärmetauscher 19, kann in Bezug auf die Fahrzeuglängsrichtung F_{L} und die Fahrzeughöhenrichtung F_{H} geneigt angeordnet sein. Das Kühlsystem 16, Teile des Antriebsaggregats 3, Abgasstrangkomponenten sowie andere dem Antriebsaggregat 3 zugeordnete Hilfsaggregate, wie Pumpen, Lichtmaschinen oder dergleichen, sind in einem Motorraum 20 des Traktors 1 angeordnet, der von einer Motorhaube 21 umschlossen ist. Neben dem Chassis 2 und dem Kühlsystem 16 umfasst der Traktor 1 üblicherweise noch eine Kabine 22, in welcher sich ein - in den FIGs. nicht dargestellter - Bediener zur Steuerung und Bedienung des Traktors 1 aufhalten kann.

Wesentlich für eine hohe Wendigkeit des Traktors 1 und somit einen zuverlässigen Einsatz desselben, insbesondere bei Arbeiten in Reihenkulturen, welche eine hohe Präzision erfordern, sind nunmehr die folgenden Merkmale: Das Achsgetriebegehäuse 13 der Vorderachsbaugruppe 6 ist in Fahrzeuglängsrichtung F_{L} gesehen zwischen dem Antriebsaggregat 3 und der Frontanbaubaugruppe 7 angeordnet ist. Mit anderen Worten, das Achsgetriebegehäuse 13, somit die Vorderachsbaugruppe 6 insgesamt, sind weder vollständig noch bereichsweise unter oder über dem Antriebsaggregat 3 oder der Frontanbaubaugruppe 7 angeordnet, wie es bei der aus dem Stand der Technik bekannten Architektur der Fall ist. Vielmehr schließt sich die Vorderachsbaugruppe 6 in Fahrzeuglängsrichtung F_{L} gesehen front- bzw. stirnseitig an das Antriebsaggregat 3 an. Die Frontanbaubaugruppe 7 schließt sich wiederum front- bzw. stirnseitig an die Vorderachsbaugruppe 6 an. Das Kühlsystem 16 ist zudem oberhalb des Achsgetriebegehäuses 13 und in Fahrzeuglängsrichtung F_{L} gesehen vollständig zwischen einer vorderen, sich vertikal erstreckenden Ebene 23, welche die Hüllkurven 24 der vorderen Bodeneingriffsmittel 15 in Geradeausstellung tangiert, und einer hinteren, sich vertikal erstreckenden Ebene 25, welche die Hüllkurven 24 der vorderen Bodeneingriffsmittel 15 in Geradeausstellung tangiert, angeordnet. Mit anderen Worten, durch die beiden Ebenen 23, 25, also die vordere, sich vertikal erstreckende Ebene 23, und die hintere, sich vertikal erstreckende Ebene 25, wird in Fahrzeuglängsrichtung F_{L} gesehen ein Bereich 26 definiert, in dem das Kühlsystem 16 vollständig, also sämtliche Aggregate des Kühlsystems 16, angeordnet ist. Beide Ebenen 23, 25 sind durch die Fahrzeugbreitenrichtung F_{B} und die Fahrzeughöhenrichtung F_{H} aufgespannt. Bei einer Ausgestaltung des Traktors 1 mit Vorderrädern als vordere Bodeneingriffsmittel 15 haben die beiden Ebenen 23, 25 in Fahrzeuglängsrichtung F_{L} einen Abstand zueinander, der dem Durchmesser der Vorderräder entspricht. Anders ausgedrückt, der Punkt, in dem die vordere Ebene 23 die Hüllkurve 24 eines Vorderrads in Geradeausstellung tangiert, ist von dem Punkt, in dem die hintere Ebene 25 die Hüllkurve 24 desselben Vorderrads in Geradeausstellung tangiert, mit dem Maß des Durchmessers des Vorderrads beabstandet. Die Anordnung des Kühlsystems 16 in dem von den beiden Ebenen 23, 25 definierten Bereich 26 sorgt dafür, dass das Kühlsystem 16 den Aktionsradius der vorderen Bodeneingriffsmittel 15 nicht nachteilig beeinflusst, somit große Lenkwinkel der vorderen Bodeneingriffsmittel 15 realisierbar sind, was eine hohe Wendigkeit des Traktors 1 gewährleistet.

Zusätzlich zur spezifischen Position des Kühlsystems können die dem Antriebsaggregat 3 zugeordneten Hilfsaggregate, wie Pumpen, Lichtmaschinen oder dergleichen, in einer bevorzugten Ausgestaltung derart angeordnet sein, dass sie keinen nachteiligen Einfluss auf den Aktionsradius der vorderen Bodeneingriffsmittel 15 haben. Insbesondere sind die Hilfsaggregate des Antriebsaggregats 3, sofern eine solche Ausgestaltung vorgesehen ist, in Fahrzeughöhenrichtung F_{H} gesehen vollständig über einer - in den FIGs. nicht dargestellten - oberen, sich horizontal erstreckenden Ebene, welche die Hüllkurve 24 der vorderen Bodeneingriffsmittel 15 in Geradeausstellung tangiert, angeordnet.

Damit die verschiedenen Komponenten 3, 4, 5, 6, 7 des Chassis 2 miteinander verbunden werden können, umfassen diese jeweils Anbindungsschnittstellen. So umfassen das Achsgetriebegehäuse 13, das Antriebsaggregat 3 und die Frontanbaubaugruppe 7 jeweils zwei voneinander in Fahrzeuglängsrichtung F_{L} beabstandete Anbindungsschnittstellen 27, 28, eine frontseitige Anbindungsschnittstelle 27, also eine Anbindungsschnittstelle, welche zur Front des Traktors 1 weist, und eine rückseitige Anbindungsschnittstelle 28, also eine Anbindungsschnittstelle, welche zum Heck des Traktors 1 weist. Das Achsgetriebegehäuse 13 und das Antriebsaggregat 3 sind mittels jeweils einer ihrer beiden Anbindungsschnittstellen 27, 28 miteinander verbunden. Gleiches gilt auch für die Verbindung von Achsgetriebegehäuse 13 und Frontanbaubaugruppe 7. Auch diese beiden Komponenten 13, 7 des Chassis 2 sind mittels jeweils einer ihrer Anbindungsschnittstellen 27, 28 miteinander verbunden. Das Antriebsaggregat 3 ist ferner mittels einer seiner Anbindungsschnittstellen 27, 28 mit dem Fahrgetriebe 4 verbunden und die Frontanbaubaugruppe 7 ist mittels einer ihrer Anbindungsschnittstellen 27, 28 zur Kopplung von Anbaugeräten oder zur Aufnahme von Ballastgewichten eingerichtet. Zur Kopplung von Anbaugeräten oder zur Aufnahme von Ballastgewichten eingerichtet bedeutet hierbei, dass die entsprechende Anbindungsschnittstelle 27, 28 als Anbauvorrichtung 29, beispielsweise als Dreipunkt-Kraftheber oder dergleichen, ausgebildet ist. Auch die weiteren Komponenten, also Fahrgetriebe 4 und Hinterachsbaugruppe 5, umfassen entsprechende Anbindungsschnittstellen, auf welche nachfolgend allerdings nicht näher eingegangen wird.

Genauer gesagt ist die rückseitige Anbindungsschnittstelle 28.1 des Achsgetriebegehäuses 13 mit der frontseitigen Anbindungsschnittstelle 27.2 des Antriebsaggregats 3 verbunden. Die frontseitige Anbindungsschnittstelle 27.1 des Achsgetriebegehäuses 13 ist mit der rückseitigen Anbindungsschnittstelle 28.3 der Frontanbaubaugruppe 7 verbunden. Das Antriebsaggregat 3 ist ferner mittels seiner rückseitigen Anbindungsschnittstelle 28.2 mit dem Fahrgetriebe 4 verbunden und die Frontanbaubaugruppe 7 ist mittels ihrer frontseitigen Anbindungsschnittstelle 27.3 zur Kopplung von Anbaugeräten oder zur Aufnahme von Ballastgewichten eingerichtet. Die Verbindung bzw. Sicherung der verschiedenen genannten Komponenten des Chassis 2, also Antriebsaggregat 3, Fahrgetriebe 4, Achsgetriebegehäuse 13 bzw. Vorderachsbaugruppe 6 und Frontanbaubaugruppe 7, mit- bzw. aneinander über die Anbindungsschnittstellen 27, 28 kann dabei mittels geeigneter Verbindungsmittel, beispielsweise Schrauben, Bolzen, Stifte oder dergleichen, erfolgen.

Bezugnehmend auf die Anordnung des Kühlsystems 16 im Hinblick auf eine hohe Wendigkeit des Traktors 1 ist es in einer bevorzugten Ausführungsform vorgesehen, dass das Kühlsystem 16 in Fahrzeuglängsrichtung F_{L} gesehen nicht nur vollständig zwischen den Ebenen 23, 25, also im Bereich 26, angeordnet ist, sondern vielmehr vollständig zwischen den beiden Anbindungsschnittstellen 27, 28 des Achsgetriebegehäuses 13, also der frontseitigen Anbindungsschnittstelle 27.1 und der rückseitigen Anbindungsschnittstelle 28.1 des Achsgetriebegehäuses 13. Hierdurch wird die Position des Kühlsystems 16 auf einen Bereich unmittelbar oberhalb der Vorderachsbaugruppe 6, genauer gesagt unmittelbar oberhalb des Achsgetriebegehäuses 13 festgelegt.

Um die Wendigkeit des Traktors 1 weiter zu verbessern, ist das Antriebsaggregat 3 in einem Bereich vor der Anbindungsschnittstelle, mittels welcher das Antriebsaggregat 3 mit der dem Achsgetriebegehäuse 13 verbunden ist, also der frontseitigen Anbindungsschnittstelle 27.2 des Antriebsaggregats 3, mit einem Einzug 30.1 versehen. Bei der bevorzugten Ausgestaltung des Antriebsaggregats 3 als Verbrennungskraftmaschine ist der Einzug 30.1 demnach durch das Gehäuse der Ölwanne 9 ausgebildet, welche im Übrigen die frontseitige und rückseitige Anbindungsschnittstelle 27.2, 28.2 des Antriebsaggregats 3 umfasst bzw. ausbildet. Die Frontanbaubaugruppe 7 weist ebenfalls einen Einzug 30.2 auf. Dieser Einzug 30.2 ist in einem Bereich nach deren Anbindungsschnittstelle, mittels welcher die Frontanbaubaugruppe 7 mit dem Achsgetriebegehäuse 13 verbunden ist, also der rückseitigen Anbindungsschnittstelle 28.3 der Frontanbaubaugruppe 7 ausgebildet. Mittels dieser beiden Einzüge 30.1, 30.2 am Antriebsaggregat 3 bzw. an der Frontanbaubaugruppe 7 ist es möglich, einen größeren Lenkwinkel der vorderen Bodeneingriffsmittel 15 zu realisieren. Die vorderen Bodeneingriffsmittel 15 können sich bei einem Lenkeinschlag jeweils in einen der Einzüge 30.1, 30.2 hineinbewegen, welche immer beidseitig des Antriebsaggregats 3 und der Frontanbaubaugruppe 7 ausgebildet sind, also für die an beiden Radaufhängungen 14 der Vorderachsbaugruppe 6 angeordneten vorderen Bodeneingriffsmittel 15 vorgesehen sind. Die Schaffung solcher Einzüge 30.1, 30.2 in Kombination mit der erfindungsgemäßen Positionierung des Kühlsystems 16 relativ zu den vorderen Bodeneingriffsmitteln 15 oder dem Achsgetriebegehäuse 13 sorgt weiter vorteilhaft für eine hohe Wendigkeit. Auch die Motorhaube 21 kann entsprechend oberhalb der Einzüge 30.1, 30.2 ausgebildete bzw. ausgeformte Einzüge 31 umfassen, um den Aktionsradius der vorderen Bodeneingriffsmittel 15 nicht nachteilig zu beeinflussen.

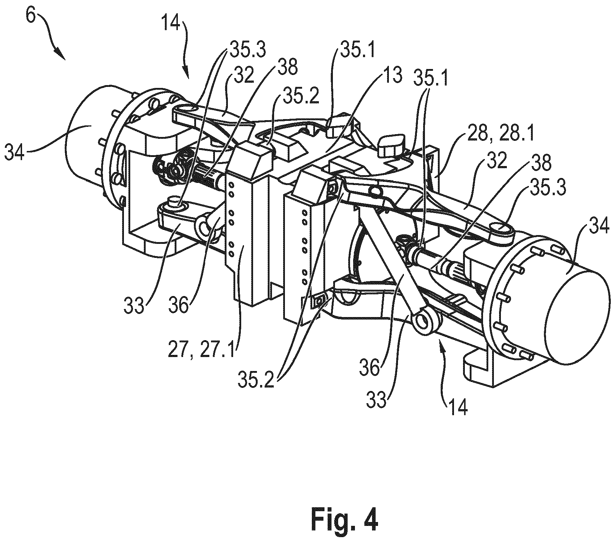

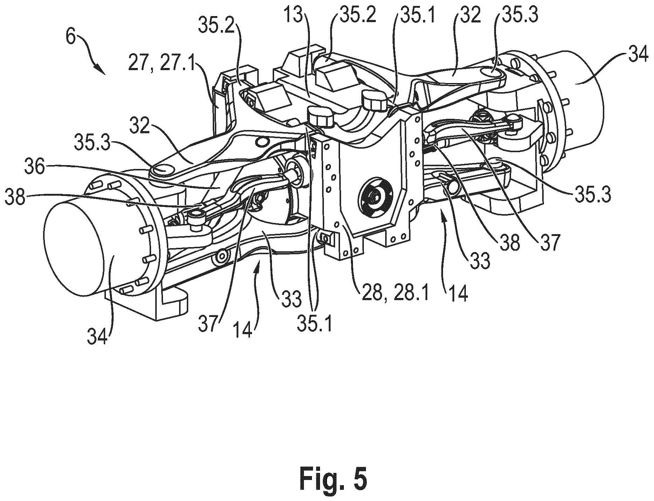

Jede der am Achsgetriebegehäuse 13 angeordneten bzw. gelagerten Radaufhängungen 14 zeichnet sich durch einen mehrteiligen Aufbau aus, welcher insbesondere in den FIGs. 4 und 5 näher dargestellt ist. Die Radaufhängungen 14 umfassen jeweils einen oberen Querlenker 32 und einen unteren Querlenker 33. Der obere Querlenker 32 und der untere Querlenker 33 sind jeweils einerseits mit bzw. an dem Achsgetriebegehäuse 13 schwenkbeweglich und andererseits mit einer Radnabe 34, an welcher jeweils zumindest ein vorderes Bodeneingriffsmittel 15 drehbeweglich gelagert ist, drehbeweglich verbunden bzw. gelagert. An der Radnabe 34 einer jeden Radaufhängung 14 kann wahlweise jeweils nur ein vorderes Bodeneingriffsmittel 15 oder aber auch zwei, voneinander in Fahrzeugbreitenrichtung F_{B} beabstandete, vordere Bodeneingriffsmittel 15 - eine sogenannte Doppelbereifung, welche insbesondere bei der Arbeit in Reihenkulturen Anwendung findet - angeordnet sein. Der obere Querlenker 32 und der untere Querlenker 33 einer Radaufhängung 14 erstrecken sich jeweils ausgehend vom Achsgetriebegehäuse 13 in Fahrzeugbreitenrichtung F_{B} vom Traktor 1 weg und sind in Fahrzeughöhenrichtung F_{H} voneinander beabstandet angeordnet. Der obere Querlenker 32 und/oder der untere Querlenker 33 einer Radaufhängung 14 sind Y-förmig ausgebildet, wobei jeder Y-förmig ausgebildete Querlenker 32, 33 mittels zweier Anbindungspunkte 35.1, 35.2 schwenkbeweglich mit dem Achsgetriebegehäuse 13, vorzugsweise um einen Bolzen des Achsgetriebegehäuses 13, und mittels eines Anbindungspunkts 35.3 drehbeweglich mit der Radnabe 34, vorzugsweise über einen an der Radnabe 34 ausgebildeten Kugelkopf, verbunden ist. Vorzugsweise, wie auch in den FIGs. dargestellt, sind sowohl der obere Querlenker 32 als auch der untere Querlenker 33 einer jeden Radaufhängung 14 jeweils Y-förmig ausgebildet. Zusätzlich zur Y-förmigen Ausgestaltung der Querlenker 32, 33 kann es vorgesehen sein, dass die Außengeometrie der Querlenker 32, 33 so gewählt ist, dass der Lenkwinkel der vorderen Bodeneingriffsmittel 15 weiter vergrößert, also die Wendigkeit des Traktors 1 weiter erhöht wird. Eine solche geometrische Ausgestaltung kann beispielsweise durch Abkantungen, Einzüge oder dergleichen erzielt werden. Der obere Querlenker 32 und/oder der untere Querlenker 33 ist ferner mittels mindestens eines Federungs- und/oder Dämpfungselements 36, beispielsweise eines Federungszylinders, mit dem Achsgetriebegehäuse 13 gekoppelt. Der durch die Radaufhängungen 14 und das Federungs- und/oder Dämpfungselement 36 gewährte Aktionsradius der vorderen Bodeneingriffsmittel 15 ist dabei unter Berücksichtigung der strukturellen Ausgestaltung des Chassis 2 und der Anordnung des Kühlsystems 16 so gewählt, dass die vorderen Bodeneingriffsmittel 15 zu keinem Zeitpunkt in Kontakt mit anderen Komponenten, Aggregaten oder dergleichen des Traktors 1 gelangen.

Jede Radaufhängung 14 der Vorderachsbaugruppe 6 umfasst weiterhin eine Lenkstange 37, die einerseits mit der Radnabe 34 und andererseits mit einem im Achsgetriebegehäuse 13 angeordneten - in den FIGs. nicht dargestellten - Lenkgetriebe gekoppelt ist. Die Kopplung von Lenkstange 37 und Lenkgetriebe kann unter Zwischenschaltung eines - in den FIGs. nicht dargestellten - Lenkzylinders erfolgen. Die Lenkstange 37 ist vorzugsweise in Fahrzeuglängsrichtung F_{L} gesehen näher an der Anbindungsschnittstelle des Achsgetriebegehäuses 13 positioniert ist, mittels welcher das Achsgetriebegehäuse 13 mit dem Antriebsaggregat 3 verbunden ist, also der rückseitigen Anbindungsschnittstelle 28.1 des Achsgetriebegehäuses 13, als an der Anbindungsschnittstelle des Achsgetriebegehäuses 13, mittels welcher das Achsgetriebegehäuse 13 mit der Frontanbaubaugruppe 7 verbunden ist, also der frontseitigen Anbindungsschnittstelle 27.1. Besonders bevorzugt ist die Lenkstange 37 in Fahrzeuglängsrichtung F_{L} gesehen hinter einer - in den FIGs. nicht dargestellten - in Fahrzeugbreitenrichtung F_{B} zentrisch durch die Radnaben 34 der Radaufhängung 14 verlaufenden Achse angeordnet. Mit anderen Worten, die Lenkstange 37 liegt in Fahrzeuglängsrichtung F_{L} gesehen zwischen der Anbindungsschnittstelle des Achsgetriebegehäuses 13, mittels welcher das Achsgetriebegehäuse 13 mit dem Antriebsaggregat 3 verbunden ist, also der rückseitigen Anbindungsschnittstelle 28.1 des Achsgetriebegehäuses 13, und der zentrisch durch die Radnaben 34 verlaufenden Achse. Neben dem Lenkgetriebe kann in dem Achsgetriebegehäuse 13 weiterhin ein - in den FIGs. nicht dargestelltes - Antriebsgetriebe angeordnet sein. Sofern ein solches Antriebsgetriebe vorgesehen ist, kann das Antriebsaggregat 3 eine weitere - in den FIGs. nicht dargestellte - Ausgangswelle umfassen. Das Antriebsgetriebe ist dann mit dieser Ausgangswelle, insbesondere unter Zwischenschaltung einer Kupplung, koppelbar, wodurch die vorderen Bodeneingriffsmittel 15 nicht nur lenkbar, sondern auch antreibbar sind. Die Kopplung von Radnabe 34 und Antriebsgetriebe wird bei einer solchen Ausgestaltung über eine Triebwelle 38 realisiert, die sich in Fahrzeugbreitenrichtung F_{B} ausgehend vom Achsgetriebegehäuse 13 bzw. vom darin angeordneten Antriebsgetriebe hin zur Radnabe 34 erstreckt. Die in Fahrzeugbreitenrichtung F_{B} zentrisch durch die Radnaben 34 verlaufende Achse bildet bei einer solchen Ausgestaltung vorzugsweise gleichermaßen die Rotationsachse der Treibwelle 38. Durch die Verwendung eines Antriebsgetriebes in der Vorderachsbaugruppe 6 ist es möglich verschiedene Fahrmodi, wie einen reinen Hinterradantrieb, einen reinen Bodeneingriffsmittelantrieb oder einen Allradantrieb, zu realisieren.

Das Antriebsaggregat 3 kann eine weitere Ausgangswelle 39 umfassen. Diese weitere Ausgangswelle 39 ist mit einer in der Frontanbaubaugruppe 7 gelagerten vorderen Zapfwelle 40, vorzugsweise unter Zwischenschaltung eines in der Frontanbaubaugruppe 7 angeordneten Zapfwellengetriebes 41, insbesondere mit einer Kupplung, sowie einer Welle 42, vorzugsweise Kardanwelle, zur Überbrückung des Achsgetriebegehäuses 13, koppelbar. Die vordere Zapfwelle 40 dient dazu, mittels der Anbauvorrichtung 29 mit dem Traktor 1 gekoppelte Anbaugeräte mit vom Antriebsaggregat 3 bereitgestellter Leistung zu versorgen. Die Zapfwelle 40, das in der Frontanbaubaugruppe 7 angeordnete Zapfwellengetriebe 41 und/oder die Anbauvorrichtung 29 zum Koppeln von Anbaugeräten oder zur Aufnahme von Ballastgewichten sind vorzugsweise in Fahrzeuglängsrichtung FL gesehen vor der vorderen, sich vertikal erstreckenden Ebene 23, welche die Hüllkurve 24 der vorderen Bodeneingriffsmittel 15 in Geradeausstellung tangiert, angeordnet, sodass hierdurch keine nachteiligen Restriktionen im Hinblick auf den Lenkwinkel der vorderen Bodeneingriffsmittel 15 und somit die Wendigkeit des Traktors 1 geschaffen werden. In einer besonders bevorzugten Ausgestaltung sind die Zapfwelle 40, das in der Frontanbaubaugruppe 7 angeordnete Zapfwellengetriebe 41 und die Anbauvorrichtung 29 zum Koppeln von Anbaugeräten oder zur Aufnahme von Ballastgewichten in Fahrzeuglängsrichtung FL gesehen allesamt vor der vorderen, sich vertikal erstreckenden Ebene 23, welche die Hüllkurve 24 der vorderen Bodeneingriffsmittel 15 in Geradeausstellung tangiert, angeordnet.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Traktor
- 2: Chassis
- 3: Antriebsaggregat
- 4: Fahrgetriebe
- 5: Hinterachsbaugruppe
- 6: Vorderachsbaugruppe
- 7: Frontanbaubaugruppe
- 8: Motorblock
- 9: Ölwanne
- 10: Fahrgetriebegehäuse
- 11: Hinterachsgehäuse
- 12: Hinteres Bodeneingriffsmittel
- 13: Achsgetriebegehäuse
- 14: Radaufhängung
- 15: Vorderes Bodeneingriffsmittel
- 16: Kühlsystem
- 17: Lüfter
- 18: Ölkühler
- 19: Wärmetauscher
- 20: Motorraum
- 21: Motorhaube
- 22: Kabine
- 23: Vordere Ebene
- 24: Hüllkurve vorderes Bodeneingriffsmittel
- 25: Hintere Ebene
- 26: Bereich zwischen den Ebenen
- 27: Frontseitige Anbindungsschnittstelle
- 27.1: Frontseitige Anbindungsschnittstelle Achsgetriebegehäuse
- 27.2: Frontseitige Anbindungsschnittstelle Antriebsaggregat
- 27.3: Frontseitige Anbindungsschnittstelle Frontanbaubaugruppe
- 28: Rückseitige Anbindungsschnittstelle
- 28.1: Rückseitige Anbindungsschnittstelle Achsgetriebegehäuse
- 28.2: Rückseitige Anbindungsschnittstelle Antriebsaggregat
- 28.3: Rückseitige Anbindungsschnittstelle Frontanbaubaugruppe
- 29: Anbauvorrichtung
- 30.1: Einzug Antriebsaggregat
- 30.2: Einzug Frontanbaubaugruppe
- 31: Einzug Motorhaube
- 32: Oberer Querlenker
- 33: Unterer Querlenker
- 34: Radnabe
- 35.1: Anbindungspunkt Achsgetriebegehäuse
- 35.2: Anbindungspunkt Achsgetriebegehäuse
- 35.3: Anbindungspunkt Radnabe
- 36: Federungs- und/oder Dämpfungselement
- 37: Lenkstange
- 38: Triebwelle
- 39: Ausgangswelle Antriebsaggregat
- 40: Vordere Zapfwelle
- 41: Zapfwellengetriebe
- 42: Welle

- F_{L}: Fahrzeuglängsrichtung
- F_{B}: Fahrzeugbreitenrichtung
- F_{H}: Fahrzeughöhenrichtung

## Patentansprüche

1. Traktor (1) mit einem Chassis (2), wobei das Chassis (2) ein Antriebsaggregat (3), ein Fahrgetriebe (4), eine antreibbare Hinterachsbaugruppe (5) mit daran angeordneten hinteren Bodeneingriffsmitteln (12), eine Vorderachsbaugruppe (6) mit daran angeordneten vorderen Bodeneingriffsmitteln (15) und eine Frontanbaubaugruppe (7) zum Koppeln von Anbaugeräten oder zur Aufnahme von Ballastgewichten umfasst, wobei die Vorderachsbaugruppe (6) ein Achsgetriebegehäuse (13) und zwei am Achsgetriebegehäuse (13) einander gegenüberliegend gelagerte Radaufhängungen (14), an denen die vorderen Bodeneingriffsmittel (15) angeordnet sind, umfasst, wobei der Traktor (1) ein Kühlsystem (16) zum Kühlen des Antriebsaggregats (3) umfasst, **dadurch gekennzeichnet, dass** das Achsgetriebegehäuse (13) der Vorderachsbaugruppe (6) in Fahrzeuglängsrichtung (F_{L}) gesehen zwischen dem Antriebsaggregat (3) und der Frontanbaubaugruppe (7) angeordnet ist, wobei das Kühlsystem (16) oberhalb des Achsgetriebegehäuses (13) und in Fahrzeuglängsrichtung (F_{L}) gesehen vollständig zwischen einer vorderen, sich vertikal erstreckenden Ebene (23), welche die Hüllkurven (24) der vorderen Bodeneingriffsmittel (15) in Geradeausstellung tangiert, und einer hinteren, sich vertikal erstreckenden Ebene (25), welche die Hüllkurven (24) der vorderen Bodeneingriffsmittel (15) in Geradeausstellung tangiert, angeordnet ist.

2. Traktor (1) nach Anspruch 1, **dadurch gekennzeichnet, dass** das Achsgetriebegehäuse (13), das Antriebsaggregat (3) und die Frontanbaubaugruppe (7) jeweils zwei voneinander in Fahrzeuglängsrichtung (F_{L}) beabstandete Anbindungsschnittstellen (27, 27.1, 27.2, 27.3, 28, 28.1, 28.2, 28.3) umfassen, wobei das Achsgetriebegehäuse (13) und das Antriebsaggregat (3) mittels jeweils einer ihrer beiden Anbindungsschnittstellen (27, 27.2, 28, 28.1) miteinander verbunden sind, wobei das Achsgetriebegehäuse (13) und die Frontanbaubaugruppe (7) mittels jeweils einer ihrer beiden Anbindungsschnittstellen (27, 27.1, 28, 28.3) miteinander verbunden sind, wobei das Antriebsaggregat (3) mittels einer ihrer beiden Anbindungsschnittstellen (27, 28, 28.2) mit dem Fahrgetriebe (4) verbunden ist, wobei die Frontanbaubaugruppe (7) mittels einer ihrer beiden Anbindungsschnittstellen (27, 27.3, 28) zur Kopplung von Anbaugeräten oder zur Aufnahme von Ballastgewichten eigerichtet ist.

3. Traktor (1) nach Anspruch 2, **dadurch gekennzeichnet, dass** das Kühlsystem (16) in Fahrzeuglängsrichtung (F_{L}) gesehen vollständig zwischen den beiden Anbindungsschnittstellen (27, 28) des Achsgetriebegehäuses (13) angeordnet ist.

4. Traktor (1) nach Anspruch 2 oder 3, **dadurch gekennzeichnet, dass** das Antriebsaggregat (3) in einem Bereich vor der Anbindungsschnittstelle (27, 27.2), mittels welcher das Antriebsaggregat (3) mit der dem Achsgetriebegehäuse (13) verbunden ist, und die Frontanbaubaugruppe (7) in einem Bereich nach deren Anbindungsschnittstelle (28, 28.3), mittels welcher die Frontanbaubaugruppe (7) mit dem Achsgetriebegehäuse (13) verbunden ist, jeweils einen Einzug (30.1, 30.2) umfassen.

5. Traktor (1) nach einem der Ansprüche 2 bis 4, **dadurch gekennzeichnet, dass** das Antriebsaggregat (3) als Verbrennungsmotor mit einem Motorblock (8) und einer unterhalb des Motorblocks (8) angeordneten Ölwanne (9) ausgeführt ist, wobei die Ölwanne (9) die beiden Anbindungsschnittstellen (27, 27.2, 28, 28.2) des Antriebsaggregats (3) umfasst.

6. Traktor (1) nach einem der Ansprüche 1 bis 5, **dadurch gekennzeichnet, dass** jede Radaufhängung (14) der Vorderachsbaugruppe (6) einen oberen Querlenker (32) und einen unteren Querlenker (33) umfasst, die jeweils einerseits mit dem Achsgetriebegehäuse (13) schwenkbeweglich und andererseits mit einer Radnabe (34), an welcher jeweils zumindest ein vorderes Bodeneingriffsmittel (15) drehbeweglich gelagert ist, drehbeweglich verbunden sind.

7. Traktor (1) nach Anspruch 6, **dadurch gekennzeichnet, dass** jede Radaufhängung (14) der Vorderachsbaugruppe (6) eine Lenkstange (37) umfasst, die einerseits mit der Radnabe (34) und andererseits, vorzugsweise unter Zwischenschaltung eines Lenkzylinders, mit einem im Achsgetriebegehäuse (13) angeordneten Lenkgetriebe gekoppelt ist.

8. Traktor (1) nach Anspruch 7, **dadurch gekennzeichnet, dass** die Lenkstange (37) in Fahrzeuglängsrichtung (F_{L}) gesehen näher an der Anbindungsschnittstelle (28, 28.1) des Achsgetriebegehäuses (13) positioniert ist, mittels welcher das Achsgetriebegehäuse (13) mit dem Antriebsaggregat (3) verbunden ist, als an der Anbindungsschnittstelle (27, 27.1) des Achsgetriebegehäuses (13), mittels welcher das Achsgetriebegehäuse (13) mit der Frontanbaubaugruppe (7) verbunden ist, wobei vorzugsweise die Lenkstange (37) in Fahrzeuglängsrichtung (F_{L}) gesehen hinter einer in Fahrzeugbreitenrichtung (F_{B}) zentrisch durch die Radnaben (34) der Radaufhängung (14) verlaufenden Achse angeordnet ist.

9. Traktor (1) nach einem der Ansprüche 6 bis 8, **dadurch gekennzeichnet, dass** der obere Querlenker (32) und/oder der untere Querlenker (33) jeder Radaufhängung (14) der Vorderachsbaugruppe (6) mittels mindestens eines Federungs- und/oder Dämpfungselements (36) mit dem Achsgetriebegehäuse (13) gekoppelt ist.

10. Traktor (1) nach einem der Ansprüche 6 bis 9, **dadurch gekennzeichnet, dass** der obere Querlenker (32) und/oder der untere Querlenker (33) jeder Radaufhängung (14) der Vorderachsbaugruppe (6) Y-förmig ausgebildet ist, wobei der Querlenker (32, 33) mittels zweier Anbindungspunkte (35.1, 35.2) schwenkbeweglich mit dem Achsgetriebegehäuse (13) und mittels eines Anbindungspunkts (35.3) drehbeweglich mit der Radnabe (34) verbunden ist.

11. Traktor (1) nach einem der Ansprüche 1 bis 10, **dadurch gekennzeichnet, dass** das Antriebsaggregat (3) eine Ausgangswelle umfasst, wobei die Ausgangswelle mit einer Eingangswelle des Fahrgetriebes (4), insbesondere unter Zwischenschaltung einer Kupplung, koppelbar ist und mit dieser fluchtet.

12. Traktor (1) nach einem der Ansprüche 1 bis 11, **dadurch gekennzeichnet, dass** das Antriebsaggregat (3) eine Ausgangswelle (39) umfasst, wobei die Ausgangswelle (39) mit einer in der Frontanbaubaugruppe (7) gelagerten Zapfwelle (40), vorzugsweise unter Zwischenschaltung eines in der Frontanbaubaugruppe (7) angeordneten Zapfwellengetriebes (41) und einer Welle (42), koppelbar ist, wobei vorzugsweise die Zapfwelle (40) in Fahrzeuglängsrichtung (F_{L}) gesehen vollständig vor der vorderen, sich vertikal erstreckenden Ebene (23), welche die Hüllkurven (24) der vorderen Bodeneingriffsmittel (15) in Geradeausstellung tangiert, angeordnet ist.

13. Traktor (1) nach einem der Ansprüche 1 bis 12, **dadurch gekennzeichnet, dass** das Antriebsaggregat (3) eine Ausgangswelle umfasst, wobei die Ausgangswelle mit einem in dem Achsgetriebegehäuse (13) angeordneten Antriebsgetriebe zum Antrieb der vorderen Bodeneingriffsmittel (15) koppelbar ist.

14. Traktor (1) nach einem der Ansprüche 1 bis 13, **dadurch gekennzeichnet, dass** dem Antriebsaggregat (3) Hilfsaggregate zugeordnet sind, wobei die Hilfsaggregate in Fahrzeughöhenrichtung (F_{H}) gesehen vollständig über einer oberen, sich horizontal erstreckenden Ebene, welche die Hüllkurve (24) der vorderen Bodeneingriffsmittel (15) in Geradeausstellung tangiert, angeordnet sind.

15. Traktor (1) nach einem der Ansprüche 1 bis 14, **dadurch gekennzeichnet, dass** das Kühlsystem (16) zumindest einen Lüfter (17), einen Ölkühler (18) und einen Wärmetauscher (19) umfasst, die in Fahrzeuglängsrichtung (F_{L}) gesehen einander benachbart angeordnet sind.

16. Traktor (1) nach Anspruch 15, **dadurch gekennzeichnet, dass** zumindest eins der Aggregate (17, 18, 19) des Kühlsystems (16) in Bezug auf die Fahrzeuglängsrichtung (F_{L}) und die Fahrzeughöhenrichtung (F_{H}) geneigt angeordnet ist.
